# EUROPÄISCHE PATENTANMELDUNG

(11) **EP 4 832 316 A1**
(43) Veröffentlichungstag der Anmeldung: **28.10.2026**
(21) Anmeldenummer: 26173877.7
(22) Anmeldetag: 22.04.2026
(51) Int. Cl.: H02K 15/067, B33Y 80/00, H02K 1/14, H02K 3/44, H02K 3/24, H02K 3/30, H02K 15/122, H02K 15/0646

(54) **BOHRLOCHPUMPE MIT ELEKTRISCHER MASCHINE**

(30) Priorität: 25.04.2025 BE 202505270
(71) Anmelder: WILO SE, 44263 Dortmund (DE)
(72) Erfinder: Drubel, Oliver, 44263 Dortmund (DE); Höke, Daniel, 44263 Dortmund (DE); Buchholz, Bernd, 44263 Dortmund (DE); Raeder, Dino, 44263 Dortmund (DE); Unger, Heiko, 44263 Dortmund (DE); Vogt, Martin, 44263 Dortmund (DE); Meier-Wagner, Michael, 44263 Dortmund (DE); Schmuelling, Stefan, 44263 Dortmund (DE); Lux, Marco, 44263 Dortmund (DE); Döhler, Heiko, 44263 Dortmund (DE); Netsch, Volker, 44263 Dortmund (DE); Kohler, Henry, 44263 Dortmund (DE); Bloedhorn, Frank, 44263 Dortmund (DE); Hoben, Jörg, 44263 Dortmund (DE); Sauermann, Tobias, 44263 Dortmund (DE)
(74) Vertreter: Michalski Hüttermann & Partner mbB

(57) **Zusammenfassung**

Die Erfindung betrifft eine Bohrlochpumpe aufweisend eine elektrische Maschine (10) zum Antreiben der Bohrlochpumpe, die elektrische Maschine (10) aufweisend einen Stator (26) und mindestens eine Induktionswicklung (12), wobei der Stator (26) eine Vielzahl von Statorzähnen (24) und Statornuten (28) zur Aufnahme der mindestens einen Induktionswicklung (12) in Axialrichtung aufweist, wobei die mindestens eine Induktionswicklung (12) eine Vielzahl von elektrischen Leiterbahnen (14), die sich zumindest abschnittsweise innerhalb zwei benachbarter Statornuten (28) erstrecken, aufweist, und wobei die Induktionswicklung (12) mittels mindestens eines additiven Fertigungsverfahrens hergestellt ist..

## Beschreibung

### Technisches Gebiet

Nachfolgende Ausführungen betreffen eine elektrische Maschine zum Antreiben einer Bohrlochpumpe, mit deren Hilfe kostengünstig und bauraumsparend eine höhere Energieeffizienz durch die Verwendung von mittels additiver Fertigungsverfahren hergestellter Induktionswicklungen erreicht wird. Des Weiteren betreffen nachfolgende Ausführungen eine Bohrlochpumpe mit einer entsprechenden elektrischen Maschine.

### Technischer Hintergrund

Es ist bekannt, dass in elektrischen Maschinen für Bohrlochpumpen in der Regel herkömmliche Wicklungsarten wie vergossene Kupferdrahtwicklungen oder Seekabelwicklungen verwendet werden, die um die einzelnen Statorzähne gewickelt und in den Statornuten verbaut werden. Diese Wicklungen werden traditionell durch Wickelverfahren hergestellt, was oft mit höheren Produktionskosten und komplexeren Montageschritten verbunden ist.

Es besteht das ständige Bedürfnis, die Energieeffizienz, Betriebsstabilität und Lebensdauer von elektrischen Maschinen, insbesondere für den Einsatz in Bohrlochpumpen, zu verbessern, um ihre Leistung unter extremen Bedingungen zu optimieren und gleichzeitig die Produktionskosten zu senken.

Ausgehend von dieser Situation ist es eine vorliegende Aufgabe, eine elektrische Maschine, insbesondere für den Einsatz in einer Bohrlochpumpe, vorzuschlagen, bei der die Energieeffizienz erhöht, die Betriebsstabilität verbessert und die Lebensdauer bei Umrichterbetrieb verlängert werden kann, während gleichzeitig die Produktionskosten reduziert werden.

Durch die erhöhte Energieeffizienz und effizientere Materialverwendung trägt die Erfindung aktiv zu SDG 13 "Maßnahmen zum Klimaschutz" bei. Die innovative Nutzung additiver Fertigungsverfahren senkt den Energiebedarf und verringert Treibhausgasemissionen, wodurch die Umweltbelastung reduziert wird.

### Beschreibung - Technische Lösung

Die vorliegende Aufgabe wird durch die Merkmale des unabhängigen Anspruchs gelöst. Vorteilhafte Ausgestaltungen sind in den Unteransprüchen, der Beschreibung und den Zeichnungen angegeben. Sofern technisch möglich, können die Lehren der Unteransprüche oder Beschreibungsmerkmale beliebig mit den Lehren der Haupt- und Unteransprüche kombiniert werden.

Insbesondere wird die Aufgabe demnach gelöst durch eine elektrische Maschine zum Antreiben einer Bohrlochpumpe aufweisend einen Stator und mindestens eine Induktionswicklung, wobei der Stator eine Vielzahl von Statorzähnen und Statornuten zur Aufnahme der mindestens einen Induktionswicklung in Axialrichtung aufweist, wobei die mindestens eine Induktionswicklung eine Vielzahl von elektrischen Leiterbahnen, die sich zumindest abschnittsweise innerhalb zwei benachbarter Statornuten erstrecken, aufweist, und wobei die Induktionswicklung mittels mindestens eines additiven Fertigungsverfahrens hergestellt ist.

Durch das Merkmal, dass die Induktionswicklung mittels eines additiven Fertigungsverfahrens hergestellt ist, wird eine sehr hohe Fertigungseffizienz erreicht. Die Induktionswicklung besteht aus einer einzelnen oder mehreren, zusammenhängenden Fertigungskomponenten, die ohne separate Verbindungen oder Wickeltechniken gefertigt werden. Diese Fertigungsmethode ermöglicht eine präzise Anpassung der Wicklung an die spezifischen Anforderungen der elektrischen Maschine und garantiert eine gleichmäßige und stabile Platzierung der Leiterbahnen in den Statornuten. Die Statornuten und Statorzähne sind so angeordnet, dass sie eine optimale Magnetfeldverteilung und damit eine hohe Energieübertragungseffizienz ermöglichen. Ein weiterer Vorteil der additiven Fertigung ist die Designfreiheit. Komplexe geometrische Formen, die mit traditionellen Fertigungsmethoden schwer realisierbar sind, können nun in einem Schritt gefertigt werden, was nicht nur zu einer genaueren Fertigung, sondern auch zu höheren Leistungsdichten und damit geringeren Materialkosten beim Blechpaket sowie bei Permanentmagneterregten Synchronmaschinen bei den Permanentmagneten führt. Durch die einzelne Montage der Induktionswicklung in benachbarte Statornuten wird die Bauweise erheblich vereinfacht und die Stabilität der Maschine erhöht, da die Wicklung direkt in den Statornuten verankert wird. Dadurch kann folglich eine optimierte Energieübertragung durch präzise und flexible Gestaltung der Wicklung erreicht werden. Insbesondere kann durch die mittels mindestens eines additiven Fertigungsverfahrens hergestellten Induktionswicklung die Fertigungskosten und die Materialverschwendung reduziert werden. Zusätzlich kann die Fertigungsgenauigkeit und die Flexibilität bei der Gestaltung der Wicklung erhöht werden.

Nachfolgend werden vorteilige Aspekte erläutert und weiter nachfolgend bevorzugte modifizierte Ausführungsformen beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Soweit Ordinalzahlen, zum Beispiel "erste", "zweite", usw., verwendet werden, beispielsweise zur Bezeichnung einer Komponente, eines Elements, eines Verfahrensschritts oder einer Verfahrenshandlung, so sind diese Ordinalzahlen rein zur Differenzierung in der Bezeichnung vorgesehen und zeigen keine Abhängigkeiten oder Reihenfolgen an. Das heißt insbesondere, dass beispielsweise eine Vorrichtung nicht eine "erste Komponente" aufweisen muss, um eine "zweite Komponente" aufzuweisen. Auch kann eine Vorrichtung eine "erste Komponente", sowie eine "dritte Komponente" aufweisen, ohne aber zwangsläufig eine "zweite Komponente" aufzuweisen. Es können auch mehrere Einheiten der gleichen Ordinalzahl vorgesehen sein, also beispielsweise mehrere "erste Komponenten".

Eine elektrische Maschine ist eine Vorrichtung, die elektrische Energie in mechanische Energie umwandeln kann und umgekehrt. Die Funktionsweise basiert auf dem Prinzip der elektromagnetischen Induktion, bei dem Magnetfelder und elektrische Ströme miteinander interagieren. Die wesentlichen Bestandteile einer elektrischen Maschine umfassen einen Stator, Rotor und Wicklungen. Der Stator ist der stationäre Teil der Maschine. In ihm befinden sich die Wicklungen, die ein Magnetfeld erzeugen, wenn ein elektrischer Strom hindurchfließt. Bei einem Elektromotor sorgt das Magnetfeld des Stators dafür, dass der Rotor in Bewegung gesetzt wird. Der Stator ist so konstruiert, dass er das magnetische Feld effizient und in der Flussdichteamplitude gleichmäßig verteilt, was eine effektive Energieübertragung ermöglicht. Ein zentraler Bestandteil des Stators ist das Statorjoch, das als tragende Struktur dient und die Statorzähne miteinander verbindet. Diese Zähne sind die flussführenden Bestandteile des Stators, die in regelmäßigen Abständen angeordnet sind und die Statornuten bilden. Die Statornuten sind die Hohlräume, in denen die Wicklungen untergebracht sind, durch die der elektrische Strom fließt und das Magnetfeld erzeugt wird. Die Ströme in diesen Nuten sind entscheidend für die Erzeugung eines gleichmäßigen Magnetfeldes, das die Bewegung des Rotors antreibt. Der Stator kann aus einem Blechpaket geformt sein, bei dem der Stator aus einer Vielzahl von einzelnen Blechen besteht, die übereinandergestapelt und miteinander verbunden sind. Der Stator kann auch aus einzelnen gegeneinander isolierten Stahlpartikeln bestehend gefertigt werden. Bei dieser Bauweise wird der Stator oder Statorteile aus diesen Stahlpartikeln gesintert oder auch gedruckt.

Das Statorjoch und die Statorzähne sind insbesondere einstückig ausgebildet. Dadurch kann die Induktionswicklung lediglich in Axialrichtung entlang eines Statorzahns in zwei benachbarte Statornuten eingebracht und dort für den Betrieb der elektrischen Maschine positioniert werden.

Der Rotor ist der drehbare Teil der Maschine, der sich innerhalb des Stators befindet. In einem Elektromotor wird er durch das Magnetfeld des Stators in Bewegung gesetzt. Diese Bewegung des Rotors erzeugt mechanische Energie, die dann für verschiedene Anwendungen genutzt werden kann. Ein weiteres wichtiges Element sind die Wicklungen. Diese bestehen in der Regel aus Kupferdraht oder anderen leitfähigen Materialien und sind im Stator oder Rotor angebracht. Die Wicklungen sind entscheidend, um ein Magnetfeld zu erzeugen und den elektrischen Strom durch die Maschine zu leiten. Sie ermöglichen die Umwandlung von elektrischer Energie in mechanische Energie oder umgekehrt. Elektrische Anschlüsse verbinden die Wicklungen der elektrischen Maschine mit der Stromquelle oder dem Stromnetz und ermöglichen so die Energieversorgung oder die Energieabgabe. Diese Verbindungen sind entscheidend für die Funktion der Maschine und müssen zuverlässig und sicher ausgeführt werden, um einen stabilen Betrieb zu gewährleisten.

Eine Bohrlochpumpe ist eine spezialisierte Pumpe, die in tiefen Bohrlöchern eingesetzt wird, um Flüssigkeiten, wie Wasser, Öl oder Gas, aus großen Tiefen an die Oberfläche zu fördern. Diese Pumpen sind für den Einsatz unter extremen Bedingungen ausgelegt und müssen in der Lage sein, hohen Drücken und Temperaturen zu widerstehen. Zudem sind sie oft mit abrasiven und korrosiven Flüssigkeiten konfrontiert, was ihre Konstruktion besonders robust und langlebig macht. In der Regel werden Bohrlochpumpen durch mechanische oder elektrische Antriebe betrieben, wobei in modernen Anwendungen zunehmend elektrische Maschinen zum Einsatz kommen. Die elektrische Maschine spielt dabei eine entscheidende Rolle, da sie die mechanische Energie liefert, die notwendig ist, um die Bohrlochpumpe zu betreiben. In vielen Fällen wird eine Induktionswicklung verwendet, um den Motor der elektrischen Maschine anzutreiben, der dann die rotierenden Teile der Pumpe in Bewegung setzt. Diese Wicklung ist der entscheidende Bestandteil, um die Umwandlung von elektrischer in mechanische Energie zu ermöglichen. Besonders in tieferen Bohrlöchern, in denen hohe Drücke und Temperaturen herrschen, ist die Wahl einer zuverlässigen und effizienten elektrischen Maschine entscheidend, um kontinuierliche Förderleistung und eine lange Lebensdauer zu gewährleisten. Die induktiven Antriebssysteme der elektrischen Maschinen, die in Bohrlochpumpen verwendet werden, sind speziell dafür ausgelegt, in extremen Umgebungen zuverlässig zu arbeiten. Die einteilige Induktionswicklung sorgt für eine hohe mechanische Stabilität und elektrische Effizienz, die bei der Energieübertragung und beim Betrieb der Bohrlochpumpe von entscheidender Bedeutung ist. Diese Wicklung muss nicht nur die hohe mechanische Belastung der Pumpe bewältigen, sondern auch mit den teils abrasiven Flüssigkeiten und extremen Temperaturbedingungen umgehen können, was durch eine präzise und robuste Fertigung ermöglicht wird. Somit stellt die elektrische Maschine, die mit einer hochwertigen Induktionswicklung ausgestattet ist, das Rückgrat für den Betrieb der Bohrlochpumpe dar. Die kontinuierliche Verbesserung dieser Maschinen und Wicklungen durch moderne Fertigungsverfahren, wie etwa additive Fertigung, ist ein wesentlicher Bestandteil dieser Erfindung. Hierdurch sollen die Zuverlässigkeit, Effizienz und Lebensdauer der Bohrlochpumpe erhöht werden und damit die zuverlässige Förderung von Flüssigkeiten aus tiefen Bohrlochumgebungen ermöglichen.

Die Induktionswicklung ist einstückig oder mehrstückig mittels eines additiven Fertigungsverfahrens hergestellt und stellt einen wesentlichen technologischen Fortschritt dar. Insbesondere bei Stern-Dreieckanlauf besteht die Induktionswicklung aus mindeste einem Stück pro Phase. Bei Umrichterbetrieb kann sie aus einem Stück hergestellt werden. Die Induktionswicklung zeichnet sich dadurch aus, dass sie als einzelne, zusammenhängende Fertigungskomponente bestehend aus einem Leiter hergestellt werden kann, ohne die Notwendigkeit komplexer Verbindungen oder zusammengesetzter Wicklungsstrukturen. Dadurch sind die Leiterbahnen in einer nahtlosen Struktur angeordnet, was zu einer erhöhten mechanischen Stabilität und einer zuverlässigeren Funktion der Induktionswicklung führt. Die additive Fertigung, wie beispielsweise 3D-Druck, Selective Laser Sintering (SLS) oder Fused Deposition Modeling (FDM), ermöglicht es, die Induktionswicklung in einem einzigen Fertigungsschritt zu erstellen. Diese Verfahren bieten zahlreiche Vorteile, da sie eine präzise, maßgeschneiderte Herstellung von komplexen Strukturen mit veränderlichen Querschnitten ohne den Einsatz von traditionellen Wickeltechniken ermöglichen. Die einteilige Struktur der Induktionswicklung bedeutet, dass die Wicklung nicht aus mehreren Drahtsträngen oder Teilen je nach Querschnitt zusammengefügt werden muss, wodurch die Fertigungskosten gesenkt und die Möglichkeit von Fehlerquellen minimiert werden kann. Besonders bei Induktionswicklungen, die für hohe Leistung und Effizienz ausgelegt sind, stellt diese Methode sicher, dass die Wicklung exakt nach den Anforderungen der elektrischen Maschine gefertigt wird. Die additive Fertigung eröffnet ferner die Möglichkeit, sehr komplexe Geometrien zu erzeugen, die mit traditionellen Fertigungsmethoden nur schwer oder gar nicht realisierbar wären. Beispielsweise können die Leiterbahnen innerhalb der Induktionswicklung in spezifischen Winkeln oder Formen angeordnet werden, um die elektrischen Feldstärkeverteilungen zwischen den Leitern aber auch von den Leitern zum Erdpotential zu optimieren. Diese Designfreiheit führt zu einer verbesserten Leistungsfähigkeit der Maschine, da die elektrischen Beanspruchungen minimiert, aber gleichzeitig Kupferquerschnitte womöglich maximiert und somit Energieverluste reduziert werden. Die Induktionswicklung ist so konzipiert, dass sie in zwei benachbarte Statornuten in Axialrichtung geschoben werden kann. Dieser mechanische Vorteil bewirkt, dass die Induktionswicklung schnell und sicher in die Maschine eingebaut werden kann. Die Axialmontage sorgt dafür, dass die Induktionswicklung sich in einer stabilen Position befindet und während des Betriebs keine ungewollte Bewegung stattfinden kann, was zur langfristigen Stabilität und Zuverlässigkeit der elektrischen Maschine beiträgt. Der Vorteil des Schiebemechanismus in den Statornuten besteht darin, dass die Wicklung seperat vom Blechpaket gedruckt werden kann. Dies geht insbesondere auch dann, wenn das Statorblechpaket aus einem Teil besteht und damit weniger anfällig für mechanische Schwingungen oder auch Beschädigungen ist. Dies reduziert die Wahrscheinlichkeit von Kontaktproblemen oder mechanischen Fehlern, die bei herkömmlichen Wickelmethoden auftreten könnten.

Durch einteilig ausgebildete Induktionswicklungen zum Beispiel für Umrichterbetrieb oder bei direktanlaufenden Bohrlochmotoren entfällt somit die Notwendigkeit, mehrere Wicklungsstränge oder Verbindungen zusammenzufügen. Dies minimiert potenzielle Fehlerquellen und vereinfacht die Fertigung. Die einteilige Konstruktion führt zu einer höheren mechanischen Stabilität, da Verbindungsstellen vermieden werden, die mechanische Brüche oder Fehler begünstigen. Durch die präzise Fertigung der Wicklungen mittels additiver Fertigung können die Leiterbahnen so angeordnet werden, dass das elektrische Feld zwischen den Leitern optimiert verteilt wird, was die Lebensdauer der elektrischen Maschine steigert. Die Möglichkeit, komplexe Geometrien zu fertigen, ermöglicht eine optimierte Anordnung der Leiterbahnen, die genau den elektrischen und magnetischen Anforderungen der Maschine entspricht. Die einfache Handhabung und der schnelle Einbau der Wicklung in benachbarte Statornuten in Axialrichtung ermöglichen eine schnellere Fertigung und Inbetriebnahme der Maschine. Der Schiebemechanismus sorgt für eine sichere und stabile Platzierung der Wicklung. Mögliche Wartungsarbeiten können dadurch auch kostengünstig vereinfacht werden. Insbesondere indem einzelne und defekte Induktionswicklungen einfach ausgetauscht werden können. Da keine komplexen Verbindungsprozesse erforderlich sind und die Induktionswicklung in einem einzigen Schritt hergestellt werden kann, können die Fertigungskosten, der Material- und Arbeitsaufwand reduziert werden. Die nahtlose Konstruktion der Wicklung minimiert potenzielle mechanische oder elektrische Ausfälle und trägt zu einer höheren Lebensdauer der Maschine bei.

Alternativ oder ergänzend kann vorgesehen sein, dass die Induktionswicklung aus Kupfer und/oder einer Kupferlegierung mittels mindestens eines additiven Fertigungsverfahrens hergestellt ist. Insbesondere ist vorgesehen, dass die Leiterbahnen der Induktionswicklung einteilig ausgebildet sind. Durch die Verwendung von Kupfer oder Kupferlegierungen wird sichergestellt, dass die Induktionswicklung eine hohe elektrische Leitfähigkeit aufweist, was zu einer reduzierten Verlustleistung und einer insgesamt höheren Effizienz der elektrischen Maschine führt. Kupfer und Kupferlegierungen sind hervorragende elektrische Leiter und sorgen dafür, dass der elektrische Strom ohne große Verluste durch die Induktionswicklung fließen kann. Die einteilige Ausführung der Leiterbahnen trägt zusätzlich zur Zuverlässigkeit und Langlebigkeit der Induktionswicklung bei. Indem die Induktionswicklung als ein einziges Element ohne separate Verbindungen oder Übergänge hergestellt wird, verringert sich das Risiko von mechanischen Schwachstellen, die bei anderen Fertigungsverfahren auftreten können. Das additive Fertigungsverfahren sorgt dafür, dass die Induktionswicklung nicht nur elektrisch effizient, sondern auch mechanisch robust ist, wodurch ihre Lebensdauer und Betriebsstabilität unter extremen Bedingungen gewährleistet werden. Zudem ermöglichen additive hergestellte Kupfer und Kupferlegierungen Leiterstrukturen, die eine präzise Steuerung der Flussverknüpfung innerhalb des jeweiligen Leiters erhöht. Besonders vorteilhaft ist dabei die Reduzierung von Flusstreuung zwischen parallelen verdrillten oder geroebelten Leiterbahnen da Wirbelstromverluste minimiert werden. Dies führt zu einer verbesserten Leistungsdichte der elektrischen Maschine und einer optimierten Nutzung des erzeugten Magnetfeldes. Durch die Kombination dieser Vorteile wird eine höhere Effizienz und eine verbesserte Gesamtperformance der elektrischen Maschine erreicht.

Alternativ oder ergänzend kann vorgesehen sein, dass die Vielzahl von Leiterbahnen zumindest teilweise mittels eines Isolationsmittels elektrisch voneinander entkoppelt sind. Durch die Verwendung eines Isolationsmittels, das die Leiterbahnen der Induktionswicklung elektrisch voneinander trennt, wird die Sicherheit und Stabilität der gesamten Induktionswicklung erhöht. Das Isolationsmittel verhindert Kurzschlüsse zwischen den Leiterbahnen und sorgt dafür, dass der elektrische Strom gezielt durch die Induktionswicklung fließt, ohne unerwünschte Strompfade zu bilden. Dies trägt zur Effizienz der Energieübertragung bei und verhindert mögliche elektrische Störungen oder Stromausfälle, die durch ungewollte Kurzschlüsse entstehen könnten. Die präzise Platzierung des Isolationsmittels innerhalb der Induktionswicklung sorgt außerdem für eine bessere thermische Entkopplung, sodass die Wärme, die während des Betriebs erzeugt wird, besser abgeleitet werden kann.

Alternativ oder ergänzend kann vorgesehen sein, dass das Isolationsmittel während des Betriebs der elektrischen Maschine in unmittelbaren Kontakt mit Fluiden, insbesondere Wasser oder Wasserglycol, steht. Das Isolationsmittel, das während des Betriebs der elektrischen Maschine in direkten Kontakt mit Betriebsflüssigkeiten wie Wasser oder Wasserglycol steht, erfüllt eine doppelte Funktion. Es sorgt einerseits für die elektrische Isolation der Leiterbahnen und andererseits als Wärmeleitung zum Fluid. Diese Flüssigkeiten dienen als effektive Kühlmittel, die überschüssige Wärme von der Induktionswicklung abführen, wodurch die elektrische Maschine ihre Betriebstemperatur stabil halten kann. Die direkte Verbindung des Isolationsmittels mit den Kühlflüssigkeiten sorgt für eine kontinuierliche Thermoregulierung, die Überhitzung und Leistungsabfälle während des Betriebs verhindert. Diese Funktion verbessert nicht nur die Betriebsdauer, sondern auch die Effizienz der elektrischen Maschine, da die Kühlung optimal auf die Isolierung abgestimmt werden kann.

Alternativ oder ergänzend kann vorgesehen sein, dass das Isolationsmittel als Epoxidharzsysteme mit aminischen Härtern, dicyandiamid basierten Härtern und/oder Novolake ausgebildet ist. Die Verwendung von Epoxidharzsystemen mit aminischen Härtern oder Novolake als Isolationsmaterial sorgt für eine hohe Beständigkeit gegenüber extremen Bedingungen. Diese Materialien bieten exzellente chemische und thermische Stabilität, sodass sie auch bei hohen Betriebstemperaturen und in anspruchsvollen Umgebungen zuverlässig ihre Funktion erfüllen. Das Epoxidharz hat die Fähigkeit, mechanische Belastungen zu widerstehen und schützt die Wicklung vor korrosiven Einflüssen oder äußeren Störungen. Diese Langzeitstabilität stellt sicher, dass die Isolierung der Induktionswicklung über die gesamte Lebensdauer der elektrischen Maschine hinweg erhalten bleibt, wodurch die Leistung und Betriebszuverlässigkeit gewährleistet sind. Epoxidharzsysteme mit aminischen Härtern sind Kunstharzverbindungen, die durch eine chemische Reaktion zwischen Epoxidharzen und aminischen Härtern aushärten. Diese Härter enthalten primäre oder sekundäre Amine, die mit den Epoxidgruppen reagieren und dabei ein stabiles, festes Polymernetzwerk bilden. Durch diese Reaktion entsteht eine Struktur mit hoher mechanischer Festigkeit und ausgezeichneter thermischer sowie chemischer Beständigkeit. Besonders hervorzuheben ist die gute elektrische Isolierfähigkeit, die Epoxidharzsysteme mit aminischen Härtern zu einem idealen Isolationsmaterial für Hochspannungsanwendungen macht. Darüber hinaus sind sie resistent gegenüber Feuchtigkeit, Ölen und zahlreichen Chemikalien, was ihre Langlebigkeit unter anspruchsvollen Betriebsbedingungen weiter erhöht. Novolake hingegen sind eine spezielle Form von Phenolharzen, die durch die Kondensation von Phenolen mit Aldehyden unter sauren Bedingungen entstehen. Im Gegensatz zu Epoxidharzen sind Novolake zunächst thermoplastisch, benötigen aber zusätzliche Härter wie Hexamethylentetramin, um vollständig auszuhärten. Nach der Härtung bieten sie eine außergewöhnliche thermische Stabilität und eine hohe Beständigkeit gegenüber Chemikalien wie Säuren, Lösungsmitteln und Ölen. Aufgrund ihrer robusten Struktur weisen Novolake zudem eine hohe mechanische Festigkeit auf und haften gut auf Metallen und anderen Materialien. Diese Eigenschaften machen sie zu einer hervorragenden Wahl für Anwendungen, in denen extreme Temperaturen und aggressive Umgebungsbedingungen vorherrschen. Sowohl Epoxidharzsysteme mit aminischen Härtern als auch Novolake tragen dazu bei, die elektrische Isolierung der Induktionswicklungen dauerhaft zu gewährleisten. Während Epoxidharze durch ihre kontrollierbare Aushärtung und hervorragende elektrische Isoliereigenschaften überzeugen, bieten Novolake eine außergewöhnliche Widerstandsfähigkeit gegenüber chemischen und thermischen Belastungen. Beide Materialien tragen somit maßgeblich zur Langlebigkeit und Betriebssicherheit der elektrischen Maschine bei.

Alternativ oder ergänzend kann vorgesehen sein, dass die Induktionswicklung, insbesondere vor dem Verguss mit Epoxiden oder Novolaken, stirnseitig zwei Wickelkopfbereiche aufweist und die sich zumindest abschnittsweise innerhalb der Statornut erstreckenden Leiterbahnen mit einem Isolierungsmittel versehen sind. Insbesondere ist vorgesehen, dass die Wickelkopfbereiche kein Isolierungsmittel aufweisen. Durch die Isolierung der Leiterbahnen innerhalb der Statornuten wird eine sichere elektrische Trennung vor dem Verguss gewährleistet. Insbesondere ist vorgesehen, dass erst in einem zweiten Isolationsschritt ein Epoxidharzbasiertes Isoliermittel in die gesamte Wicklung und um die Wicklung eingebracht wird.

Alternativ oder ergänzend kann vorgesehen sein, dass die Induktionswicklung stirnseitig zwei Wickelkopfbereiche aufweist und die Wickelkopfbereiche mit einem Isolierungsmittel versehen sind. Insbesondere ist vorgesehen, dass die sich zumindest abschnittsweise innerhalb der Statornut erstreckenden Leiterbahnen, insbesondere vor dem Verguss mit Epoxiden oder Novolaken, kein Isolierungsmittel aufweisen. Die Wickelkopfbereiche sind in dieser Ausführung mit einem Isolierungsmittel versehen, um die sichere elektrische Trennung vor dem Verguss zu gewährleisten und mögliche Kurzschlüsse zu verhindern. Nach dem Verguss mit Epoxiden oder Novolaken sind alle Leiter voneinander und zum umgebenden Fluid hin insoliert. Insbesondere ist vorgesehen, dass erst in einem zweiten Isolationsschritt ein Epoxidharzbasiertes Isoliermittel in die gesamte Wicklung und um die Wicklung eingebracht wird.

Alternativ oder ergänzend kann vorgesehen sein, dass das Isolationsmittel die Leiterbahnen der Induktionswicklung voneinander beabstandet und mittels des mindestens einem additiven Fertigungsverfahren eine Vielzahl von Abstandshaltern gemeinsam mit der Induktionswicklung hergestellt sind. Insbesondere ist vorgesehen, dass im Anschluss an das additive Fertigungsverfahren die Induktionswicklung zumindest teilweise, insbesondere vollständig, mit dem Isolationsmittel, welches insbesondere Epoxid und/oder Novolaken umfasst, umgossen wird. Das Isolationsmittel sorgt nicht nur für eine elektrische Trennung der Leiterbahnen, sondern auch für die mechanische Stabilität der Induktionswicklung. Die Abstandshalter, die im Rahmen des additiven Fertigungsverfahrens direkt zusammen mit der Induktionswicklung hergestellt werden, sorgen dafür, dass die Leiterbahnen optimal positioniert bleiben. Diese Abstandshalter garantieren eine gleichmäßige Verteilung der elektrischen Belastung. Nach dem Fertigungsprozess wird die Induktionswicklung vollständig mit dem Isolationsmittel umgossen, was zusätzlichen Schutz vor äußeren Einflüssen bietet und die Wicklung langfristig vor mechanischen oder chemischen Belastungen schützt. Die Umhüllung sorgt für eine verbesserte Isolierung und gewährleistet eine sichere und stabile Leistung der Wicklung über die gesamte Lebensdauer der elektrischen Maschine.

Alternativ oder ergänzend kann vorgesehen sein, dass die Induktionswicklung mit dem Isolationsmittel zusätzlich eine elektrisch leitfähige Ummantelung zur elektrischen Feldsteuerung, insbesondere zur Minimierung der elektrischen Feldstärke zwischen Induktionswicklung und dem Wasser bzw. Wasserglycol, aufweist. Insbesondere ist vorgesehen, dass die die Ummantelung eine Kupferschicht oder eine kunststoffbasierende Kohlefaserschicht aufweist. Insbesondere sind die Kupferschicht oder die kunststoffbasierende Kohlefaserschicht in der Art eines Röbelstabes verdrillt, sodass Wirbelströme minimiert werden können. Die elektrisch leitfähige Ummantelung der Induktionswicklung ist auf Grund ihrer Abmessungen der Gefahr von Wirbelströmen ausgesetzt. Um die Wirbelströme gering zu halten, wird diese Schicht verdrillt um die Leiter der Induktionswicklung angeordnet. Einzelne verdrillte, bzw. verroebelte Schichten werden voneinander isoliert. Die Umhüllung sorgt dafür, dass die elektrische Maschine unter verschiedenen Betriebsbedingungen elektrisch stabil bleibt und in ihr nur geringere Verluste auftreten.

Alternativ oder ergänzend kann vorgesehen sein, dass die mindestens eine Induktionswicklung zum stirnseitigen Einbringen in zwei benachbarte Statornuten entlang der Längserstreckungsachsen der jeweiligen Statornuten ausgebildet ist. Insbesondere ist vorgesehen, dass sich die Vielzahl von Leiterbahnen zumindest teilweise parallel entlang der Längserstreckungsachsen benachbarter Statornuten erstrecken. Insbesondere ist vorgesehen, dass die Induktionswicklung einen ersten Wickelkopfbereich und zwei über den ersten Wickelkopfbereich miteinander verbundene Leiterstränge aufweist, wobei sich die innerhalb einer Statornut erstreckenden Leiterbahnen einen Leiterstrang bilden, wobei der erste Wickelkopfbereich eine sich parallel zur Längserstreckungsachse der Induktionswicklung erstreckende Nut zur Aufnahme eines Statorzahnes aufweist. Die Induktionswicklung ist so gestaltet, dass sie stirnseitig in zwei benachbarte Statornuten eingebracht werden kann. Dies bedeutet, dass die Induktionswicklung nahtlos und passgenau in die Nuten eingeschoben werden kann, wodurch die Bauweise der elektrischen Maschine optimiert werden kann. Die zumindest teilweise parallel angeordneten Leiterbahnen innerhalb der Statornuten verbessern die Magnetfeldverteilung und sorgen dafür, dass der Strom gleichmäßig durch die Induktionswicklung fließt, wodurch Energieverluste minimiert werden. Die Verbindung der Leiterstränge über den Wickelkopfbereich sorgt für eine gleichmäßige Verteilung der elektrischen Last und verbessert die Stabilität der elektrischen Maschine. Der Wickelkopfbereich, der eine sich parallel zur Längserstreckungsachse der Induktionswicklung erstreckende Nut zur Aufnahme eines Statorzahns aufweist, ermöglicht eine einfache und effiziente Montage der Induktionswicklung am Statorzahn und sorgt dafür, dass die Wicklung sicher und stabil im Stator platziert werden kann.

Alternativ oder ergänzend kann vorgesehen sein, dass die mindestens eine Induktionswicklung einen in Axialrichtung zu einer Stirnfläche eines Statorzahns angrenzenden zweiten Wickelkopfbereich aufweist. Insbesondere ist vorgesehen, dass der zweite Wickelkopfbereich zur formschlüssigen Begrenzung der in Axialrichtung verlaufenden Einbringbewegung der Induktionswicklung an einer Stirnseite des Statorzahns ausgebildet ist. Insbesondere ist vorgesehen, dass der zweite Wickelkopfbereich über die zwei Leiterstränge mit dem ersten Wickelkopfbereich verbunden ist. Insbesondere ist vorgesehen, dass der erste und zweite Wickelkopfbereich an zwei gegenüberliegenden Endbereichen des Statorzahns angeordnet sind.

Alternativ oder ergänzend kann vorgesehen sein, dass mindestens eine Leiterbahn mindestens eine Ausnehmung zur Kühlung der Leiterbahn aufweist. Insbesondere ist vorgesehen, dass sich die Ausnehmung zumindest abschnittsweise in Längsrichtung der Leiterbahn erstreckt. Die Ausnehmung zur Kühlung innerhalb der Leiterbahnen dient dazu, die während des Betriebs erzeugte Wärme effektiv abzuleiten. Die zumindest sich zumindest abschnittsweise in Längsrichtung der Leiterbahn erstreckende Ausnehmung ermöglicht, dass Kühlflüssigkeiten direkt an den Leiterbahnen entlangströmen, um die Temperatur der Induktionswicklung konstant zu halten und Überhitzung zu vermeiden. Durch die gezielte Positionierung der Ausnehmung wird die Wärmeabfuhr effizient gesteuert, wodurch die elektrische Maschine auch bei hohen Belastungen stabil betrieben werden kann.

Alternativ oder ergänzend kann vorgesehen sein, dass die Induktionswicklung konzentrisch mit einer Roebelung ausgebildet ist. Die Roebelung, die konzentrisch zur Induktionswicklung ausgeführt wird, sorgt für eine optimale Magnetfeldverteilung. Dies führt zu einer effizienteren Magnetfeldnutzung, da die Induktionswicklung derart ausgerichtet ist, dass sie mit den Magnetfeldern der elektrischen Maschine bestmöglich interagiert. Diese Anordnung sorgt für eine verbesserte Energieübertragung und geringere Verluste, was insgesamt zu einer höheren Leistung und Effizienz der elektrischen Maschine führt. Die Roebelung ist eine spezielle Wicklungstechnik, die insbesondere in elektrischen Maschinen mit hoher Leistung zum Einsatz kommt. Sie beschreibt eine segmentierte und schraubenförmig verschränkte Anordnung der Leiter innerhalb eines Wicklungsstrangs. Diese Bauweise dient dazu, unerwünschte elektrische Effekte wie den Skin-Effekt und Umlaufströme zu minimieren. Der Skin-Effekt tritt vor allem bei höheren Frequenzen auf und führt dazu, dass sich der elektrische Strom bevorzugt an der Oberfläche eines Leiters konzentriert. Dies kann zu einer ungleichmäßigen Stromverteilung und zu höheren Verlusten führen. Durch die Roebelung wird der Stromfluss innerhalb der Wicklung gleichmäßiger verteilt, was die elektrische Effizienz der elektrischen Maschine verbessert. Gleichzeitig werden Umlaufströme, die zwischen benachbarten Leiterbahnen entstehen können, durch die verschränkte Anordnung der Leitersegmente reduziert. Dadurch trägt die Roebelung dazu bei, die elektrische Maschine leistungsfähiger und effizienter zu gestalten. Sie verbessert die Magnetfeldkoordination, reduziert Energieverluste und sorgt für eine insgesamt optimierte Stromverteilung.

Alternativ oder ergänzend kann vorgesehen sein, dass die elektrische Maschine zwölf Statorzähne mit sechs oder zwölf Induktionswicklungen aufweist. Insbesondere ist vorgesehen, dass die Elektrische Maschine neun Statorzähne mit neun Induktionswicklungen aufweist. Insbesondere ist vorgesehen, dass die Leiterbahnen parallel oder in Reihe geschaltet sind und sich die Leiterbahnen im äußeren Bereich jeder Induktionswicklung nahe dem Sternpunktpotential befinden. Die Konfiguration der Statorzähne und Induktionswicklungen sorgt für eine optimale Lastverteilung innerhalb der elektrischen Maschine. Insbesondere bei der Verwendung von neun Statorzähnen und neun Induktionswicklungen wird eine gleichmäßige Verteilung der elektromagnetischen Felder erreicht, was die Effizienz der elektrischen Maschine steigert. Das parallele oder serielle Schalten der Leiterbahnen innerhalb der Induktionswicklungen ermöglicht eine gezielte Steuerung des elektrischen Stroms, wodurch die Leistung besser kontrolliert und optimiert werden kann. Der Platzierung der Leiterbahnen im äußeren Bereich jeder Induktionswicklung nahe dem Sternpunktpotential sorgt für eine stabilere und gleichmäßigere Verteilung der Belastung durch elektrische Felder. Dies führt zu einer verbesserten Feldverteilung und verhindert unerwünschte Feldstärkespitzen, was die Lebensdauer der elektrischen Maschine verlängert und die Betriebsstabilität erhöht.

Alternativ oder ergänzend kann vorgesehen sein, dass die Querschnittsflächen der Leiterbahnen innerhalb der Statornuten unterschiedliche Formen und/oder Größen aufweisen. Insbesondere ist vorgesehen, dass die Querschnittsflächen der Leiterbahnen innerhalb der Statornuten rund, eckig und/oder gebogen ausgebildet sind. Insbesondere ist vorgesehen, dass die Querschnittsflächen der Leiterbahnen zur Feldstärkekoordination ausgebildet sind. Insbesondere ist vorgesehen, dass die ersten Leiterbahnen, ausgehend von einer Motor- oder Generatorklemme, größere Querschnittsflächen aufweisen. Die Variation der Querschnittsflächen der Leiterbahnen in den Statornuten ermöglicht eine gezielte Steuerung des elektrischen Stroms. Die unterschiedlichen Formen und Größen der Leiterbahnen (z.B. rund, eckig oder gebogen) sorgen dafür, dass die elektrische Feldstärke innerhalb der Induktionswicklung optimal verteilt wird. Die Feldstärkekoordination durch unterschiedliche Querschnittsflächen sorgt dafür, dass die Maschinenleistung über den gesamten Betrieb hinweg stabil bleibt und gleichzeitig energetische Verluste vermieden werden. Insbesondere die ersten Leiterbahnen, die ausgehend von der Motor- oder Generatorklemme höhere Spannungsamplituden aufnehmen müssen, sind mit größeren Querschnittsflächen und Oberflächenradien ausgestattet, um diesen Anforderungen gerecht zu werden. Dies ermöglicht eine gezielte Anpassung der elektrischen Feldstärken und trägt zur Vermeidung von Durchschlägen im Isoliersystem bei.

Alternativ oder ergänzend kann vorgesehen sein, dass die Abstände zwischen den Leiterbahnen entsprechend der auf die Leiterbahnen einwirkenden Belastung durch die elektrische Feldstärke angepasst sind. Insbesondere ist vorgesehen, dass die ersten Leiterbahnen, ausgehend von einer Motor- oder Generatorklemme, stärkeren elektrischen Belastungen ausgesetzt sind und daher größere Abstände zu benachbarten Leiterbahnen aufweisen. Insbesondere ist vorgesehen, dass die Leiterbahnen zumindest innerhalb der Statornut einen Abstand im Bereich von 0,1 mm bis 2 mm aufweisen. Die Abstände zwischen den Leiterbahnen sind so gewählt, dass sie die elektrische Feldstärke optimal verteilen. Besonders die ersten Leiterbahnen, die direkt von der Motor- oder Generatorklemme ausgehen, sind stärkeren elektrischen Belastungen ausgesetzt und haben daher größere Abstände zu benachbarten Leiterbahnen. Diese gezielte Anpassung der Abstände ermöglicht, dass sich die elektrische Belastung gleichmäßig auf die Induktionswicklung verteilt, wodurch die Effizienz der elektrischen Maschine gesteigert und das Risiko von Kurzschlüssen verringert wird. Die Abstände innerhalb der Statornuten betragen insbesondere 0,1 mm bis 2 mm, was eine genaue Anpassung der elektrischen Felder ermöglicht und die Induktionswicklung derart stabilisiert, dass sie auch unter extremen Betriebsbedingungen zuverlässig arbeitet.

Alternativ oder ergänzend kann vorgesehen sein, dass Steckkontakte der Induktionswicklung mittels additiven Fertigungsverfahren hergestellt sind. Insbesondere ist vorgesehen, dass die Induktionswicklung einteilig mit den Steckkontakten ausgebildet ist. Die Steckkontakte der Induktionswicklung werden ebenfalls mittels eines additiven Fertigungsverfahrens hergestellt, wodurch sie direkt als Teil der Induktionswicklung gefertigt werden. Diese einteilige Bauweise reduziert die Notwendigkeit für zusätzliche Verbindungen oder Verkabelungen, was sowohl den Fertigungsaufwand als auch die Kosten verringert. Zudem wird die mechanische Stabilität der Steckkontakte erhöht, da sie als einzelne, zusammenhängende Fertigungskomponente gefertigt werden, ohne dass separate Komponenten verbunden werden müssen. Die Verwendung der additiven Fertigungstechnologie sorgt außerdem für eine präzise Ausführung und Platzierung der Steckkontakte, wodurch Kontaktprobleme oder mechanische Fehlfunktionen verhindert werden.

Alternativ oder ergänzend kann vorgesehen sein, dass die Leiterbahnen abgerundete Kanten zur Vermeidung von Spannungsüberhöhungen aufweisen. Die abgerundeten Kanten der Leiterbahnen sorgen dafür, dass keine Spannungsüberhöhungen entstehen, die die Induktionswicklung beschädigen könnten. Scharfe Kanten könnten die elektrische Entladung an bestimmten Punkten begünstigen, was zu einem höheren Stromverlust und einer verringerten Effizienz führen würde. Die abgerundeten Kanten stellen sicher, dass die Feldstärken gleichmäßiger verteilt werden und es keine punktuellen Überlastungen gibt. Diese Maßnahme reduziert das Risiko von Überhitzung und elektrischen Entladungen, was nicht nur die Leistung der Maschine optimiert, sondern auch ihre Langlebigkeit erhöht.

Die Aufgabe wird weiterhin gelöst durch eine Bohrlochpumpe aufweisend eine elektrische Maschine, die wie vorstehend beschrieben aus- und weitergebildet sein kann. Durch den Einsatz der beschriebenen elektrischen Maschine in einer Bohrlochpumpe wird die Betriebszuverlässigkeit und Effizienz der Pumpe erheblich gesteigert. Die individuell optimierte Induktionswicklung sorgt für eine höhere Leistung bei gleichzeitig niedrigerem Energieverbrauch. Diese Verbesserung führt zu einer höheren Langlebigkeit der Pumpe, da die elektrische Maschine selbst unter extremen Bedingungen wie hohen Belastungen oder Dauerbetrieb effizient arbeitet. Durch die Verwendung von additiven Fertigungsverfahren und innovativen Isolationsmaterialien wird zudem eine hohe Robustheit der gesamten Bohrlochpumpe gewährleistet, die über längere Zeiträume stabile Betriebsbedingungen aufrechterhält.

### Kurze Beschreibung der Zeichnungen

Nachfolgend wird eine bevorzugte technische Lösung unter Bezugnahme auf die anliegenden Zeichnungen anhand bevorzugter Ausführungsbeispiele näher erläutert. Die Formulierung "Figur" ist in den Zeichnungen mit "Fig." abgekürzt.

In den Zeichnungen zeigen
- Fig. 1: eine perspektivische Ansicht einer ersten Ausführungsform einer Induktionswicklung für eine elektrische Maschine;
- Fig. 2: eine erste Montageansicht einer zweiten Ausführungsform einer elektrischen Maschine;
- Fig. 3: eine zweite Montageansicht der elektrischen Maschine gemäß Fig. 2;
- Fig. 4: eine dritte Montageansicht der elektrischen Maschine gemäß Fig. 2 und Fig. 3;
- Fig. 5: eine Schnittansicht einer ersten Ausführungsform einer Induktionswicklung; und
- Fig. 6: eine Schnittansicht einer zweiten Ausführungsform einer Induktionswicklung.

### Detaillierte Beschreibung der Zeichnungen

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden.

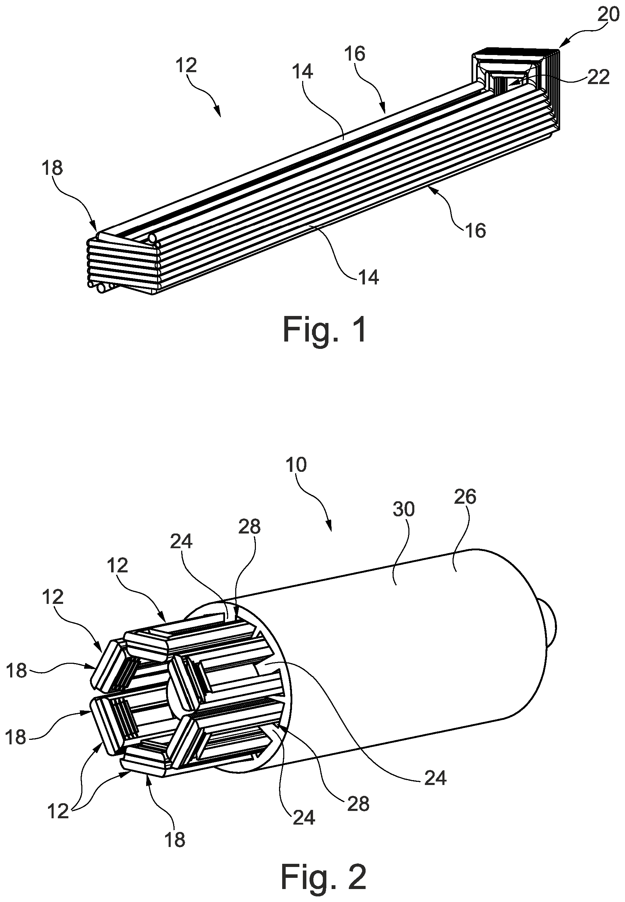

Figur 1 zeigt eine perspektivische Ansicht einer ersten Ausführungsform einer Induktionswicklung 12 für eine elektrische Maschine 10 bestehend aus einer Vielzahl von elektrischen Leiterbahnen 14, wobei die Leiterbahnen 14 zwei sich im Wesentlichen parallel zueinander erstreckenden Leitersträngen 16, einen erste Wickelkopfbereich 18 und einen zweiten Wickelkopfbereich 20 bilden. Der erste Wickelkopfbereich 18 weist eine sich parallel zur Längserstreckungsachse der Induktionswicklung 12 erstreckende Nut 22 zur Aufnahme eines Statorzahnes 24 während der Montage der Induktionswicklung 12 an einem Stator 26 aufweist. Die Leiterstränge 16 werden dabei innerhalb zwei benachbarter Statornuten 28 positioniert. Die Induktionswicklung 12 ist mittels eines additiven Fertigungsverfahrens einteilig gefertigt und somit als Ganzes innerhalb des Stators 26 einer elektrischen Maschine 10 montierbar.

Figur 2 zeigt eine erste Montageansicht einer zweiten Ausführungsform einer elektrischen Maschine 10 mit einem Stator 26 aufweisend ein Statorjoch 30 und eine Vielzahl von Statorzähnen 24, die ein Vielzahl von Statornuten 28 bilden. Die Induktionswicklungen 12 werden während der Montage in Axialrichtung entlang der Statorzähne 24 innerhalb der Statornuten 28 eingebracht.

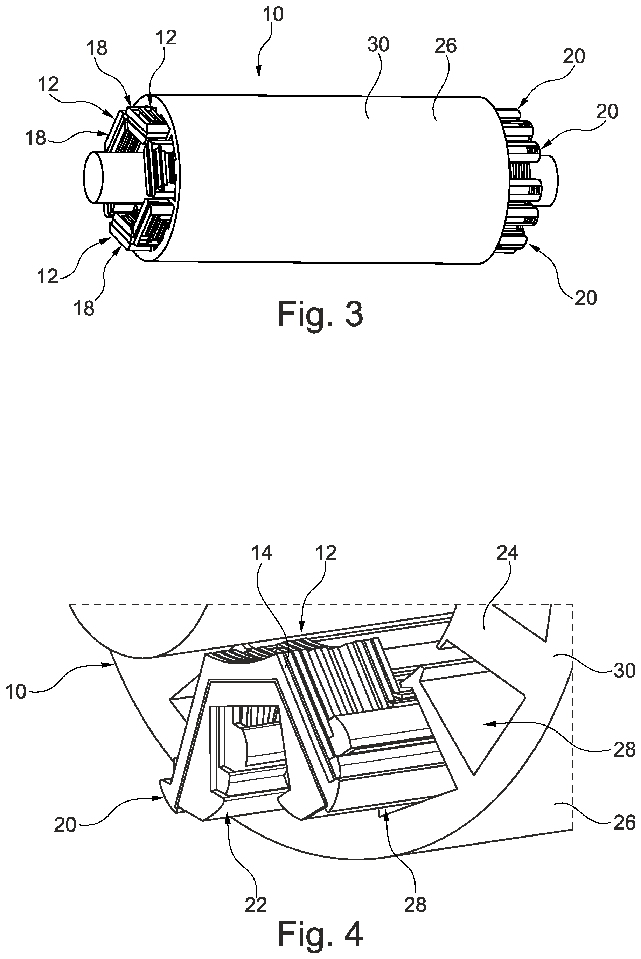

Figur 3 zeigt eine zweite Montageansicht der elektrischen Maschine 10 gemäß Fig. 2 bei der die Induktionswicklungen 12 in jeweils eine Endposition innerhalb des Stators 26 positioniert sind. Die ersten Wickelkopfbereiche 18 der Induktionswicklungen 12 grenzen dabei in Axialrichtung an jeweils eine Stirnfläche eines Statorzahnes 24.

Figur 4 zeigt eine dritte Montageansicht der elektrischen Maschine 10 gemäß Fig. 2 und Fig. 3, wobei ein zweiter Wickelkopfbereich 20 in der Endposition innerhalb des Stators 26 dargestellt ist. Die Leiterstränge 16 sind dabei innerhalb der Statornuten 28 angeordnet und die Nut 22 des zweiten Wickelkopfbereiches 20 ragt zumindest teilweise axial über einem Statorzahn 24 hinaus. Die Leiterbahnen 14 sind im Bereich des zweiten Wickelkopfbereiches 20 um den Statorzahn 24 herum angeordnet.

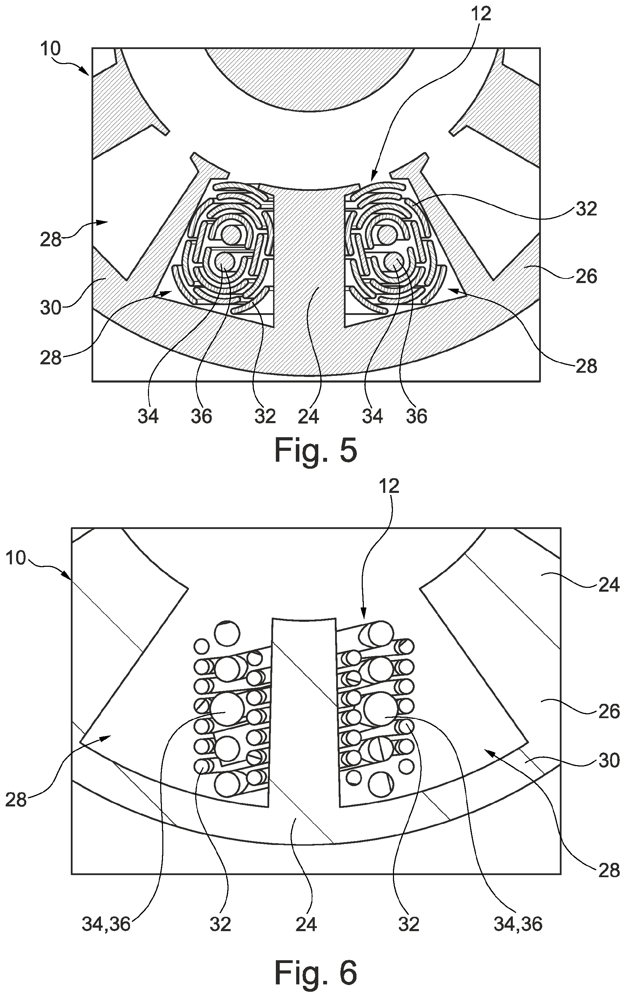

Figur 5 zeigt eine Schnittansicht einer ersten Ausführungsform einer Induktionswicklung 12, wobei die Querschnittsflächen 32 der Leiterbahnen 14 innerhalb der Statornuten 28 unterschiedliche Formen und Größen aufweisen. Dabei weisen die ersten Leiterbahnen 34, ausgehend von einer Motor- oder Generatorklemme, größere Querschnittsflächen 36 auf. Die Variation der Querschnittsflächen 32 der Leiterbahnen 14 ermöglicht eine gezielte Steuerung des elektrischen Feldes. Die unterschiedlichen Formen und Größen der Leiterbahnen 14 (z.B. rund, eckig oder gebogen) sorgen dafür, dass die elektrische Feldstärke innerhalb der Induktionswicklung 12 optimal verteilt wird. Die Abstände sind zwischen den einzelnen Leiterbahnen 14 entsprechend der auf die Leiterbahnen 14 einwirkenden Belastung durch die elektrische Feldstärke angepasst, wobei die ersten Leiterbahnen 34, ausgehend von einer Motor- oder Generatorklemme, größere Abstände zu benachbarten Leiterbahnen 14 aufweisen. Diese gezielte Anpassung der Abstände ermöglicht, dass sich die elektrische Belastung gleichmäßig auf die Induktionswicklung 12 verteilt, wodurch die Verfügbarkeit der elektrischen Maschine 10 gesteigert und das Risiko von Kurzschlüssen verringert wird.

Figur 6 zeigt eine Schnittansicht einer zweiten Ausführungsform einer Induktionswicklung 12, wobei die Querschnittsflächen 32 der Leiterbahnen 12 innerhalb der Statornuten 28 unterschiedliche Formen und Größen aufweisen. Gemäß dem Ausführungsbeispiels sind die Querschnittsflächen 32 der Leiterbahnen 14 rund ausgebildet. Dabei weisen die ersten Leiterbahnen 34, ausgehend von einer Motor- oder Generatorklemme, größere Querschnittsflächen 36 auf. Die Variation der Querschnittsflächen 32 der Leiterbahnen 14 ermöglicht auch hier eine gezielte Steuerung des elektrischen Feldes. Die unterschiedlichen Formen und Größen der Leiterbahnen 14 sorgen dafür, dass die elektrische Feldstärke innerhalb der Induktionswicklung 12 optimal verteilt wird. Die Abstände sind zwischen den einzelnen Leiterbahnen 14 entsprechend der auf die Leiterbahnen 14 einwirkenden Belastung durch die elektrische Feldstärke angepasst, wobei die ersten Leiterbahnen 34, ausgehend von einer Motor- oder Generatorklemme, größere Abstände zu benachbarten Leiterbahnen 14 aufweisen. Diese gezielte Anpassung der Abstände ermöglicht, dass sich die elektrische Belastung gleichmäßig auf die Induktionswicklung 12 verteilt, wodurch die Verfügbarkeit der elektrischen Maschine 10 gesteigert und das Risiko von Kurzschlüssen verringert wird.

### Bezugszeichenliste

- 10: Elektrische Maschine
- 12: Induktionswicklung
- 14: Elektrische Leiterbahnen
- 16: Leiterstränge
- 18: Erster Wickelkopfbereich
- 20: Zweiter Wickelkopfbereich
- 22: Nut
- 24: Statorzahn
- 26: Stator
- 28: Statornut
- 30: Statorjoch
- 32: Querschnittsflächen
- 34: Erste Leiterbahn
- 36: Größere Querschnittsfläche

## Patentansprüche

1. Bohrlochpumpe aufweisend eine elektrische Maschine (10) zum Antreiben der Bohrlochpumpe, die elektrische Maschine (10) aufweisend einen Stator (26) und mindestens eine Induktionswicklung (12), wobei
der Stator (26) eine Vielzahl von Statorzähnen (24) und Statornuten (28) zur Aufnahme der mindestens einen Induktionswicklung (12) in Axialrichtung aufweist, wobei
die mindestens eine Induktionswicklung (12) eine Vielzahl von elektrischen Leiterbahnen (14), die sich zumindest abschnittsweise innerhalb zwei benachbarter Statornuten (28) erstrecken, aufweist, und wobei
die Induktionswicklung (12) mittels mindestens eines additiven Fertigungsverfahrens hergestellt ist.

2. Bohrlochpumpe nach dem vorhergehenden Anspruch, wobei die Induktionswicklung (12) aus Kupfer und/oder einer Kupferlegierung mittels mindestens eines additiven Fertigungsverfahrens hergestellt ist, wobei insbesondere die Leiterbahnen (14) der Induktionswicklung (12) einteilig ausgebildet sind.

3. Bohrlochpumpe nach einem der vorhergehenden Ansprüche, wobei die Vielzahl von Leiterbahnen (14) zumindest teilweise mittels eines Isolationsmittels (20) elektrisch voneinander entkoppelt sind.

4. Bohrlochpumpe nach dem vorhergehenden Anspruch, wobei das Isolationsmittel (20) während des Betriebs der elektrischen Maschine (10) in unmittelbaren Kontakt mit Fluiden (22), insbesondere Wasser oder Wasserglycol, steht.

5. Bohrlochpumpe nach einem der beiden vorhergehenden Ansprüche, wobei das Isolationsmittel (20) als Epoxidharzsysteme mit aminischen Härtern, dicyandiamid basierten Härtern und/oder Novolake ausgebildet ist.

6. Bohrlochpumpe nach einem der drei vorhergehenden Ansprüche, wobei die Induktionswicklung (12) stirnseitig zwei Wickelkopfbereiche (18) aufweist und die sich zumindest abschnittsweise innerhalb der Statornut (28) erstreckenden Leiterbahnen (14) mit einem Isolierungsmittel (20) versehen sind, wobei insbesondere die Wickelkopfbereiche (18) kein Isolierungsmittel (20) aufweisen, wobei insbesondere erst in einem zweiten Isolationsschritt ein Epoxidharzbasiertes Isoliermittel in die gesamte Wicklung und um die Wicklung eingebracht wird.

7. Bohrlochpumpe nach einem der vorhergehenden Ansprüche 3 bis 5, wobei die Induktionswicklung (12) stirnseitig zwei Wickelkopfbereiche (18) aufweist und die Wickelkopfbereiche (18) mit einem Isolierungsmittel (20) versehen sind, wobei insbesondere die sich zumindest abschnittsweise innerhalb der Statornut (28) erstreckenden Leiterbahnen (14) kein Isolierungsmittel (20) aufweisen, wobei insbesondere erst in einem zweiten Isolationsschritt ein Epoxidharzbasiertes Isoliermittel in die gesamte Wicklung und um die Wicklung eingebracht wird.

8. Bohrlochpumpe nach einem der fünf vorhergehenden Ansprüche, wobei das Isolationsmittel (20) die Leiterbahnen (14) der Induktionswicklung (12) voneinander beabstandet und mittels des mindestens einem additiven Fertigungsverfahren eine Vielzahl von Abstandshaltern gemeinsam mit der Induktionswicklung (12) hergestellt sind, wobei insbesondere im Anschluss an das additive Fertigungsverfahren die Induktionswicklung (12) zumindest teilweise, insbesondere vollständig, mit dem Isolationsmittel (20) umgossen wird.

9. Bohrlochpumpe nach einem der sechs vorhergehenden Ansprüche, wobei die Induktionswicklung (12) mit dem Isolationsmittel (20) eine elektrisch leitfähige Ummantelung zur elektrischen Feldsteuerung aufweist, wobei insbesondere die Ummantelung eine Kupferschicht oder eine kunststoffbasierende Kohlefaserschicht aufweist.

10. Bohrlochpumpe nach einem der vorhergehenden Ansprüche, wobei die mindestens eine Induktionswicklung (12) zum stirnseitigen Einbringen in zwei benachbarte Statornuten (28) entlang der Längserstreckungsachsen (28) der jeweiligen Statornuten (28) ausgebildet ist, wobei insbesondere sich die Vielzahl von Leiterbahnen (14) zumindest teilweise parallel entlang der Längserstreckungsachsen (28) benachbarter Statornuten (28) erstrecken, wobei insbesondere die Induktionswicklung (12) einen ersten Wickelkopfbereich (18) und zwei über den ersten Wickelkopfbereich (18) miteinander verbundene Leiterstränge (16) aufweist, wobei sich die innerhalb einer Statornut (28) erstreckenden Leiterbahnen (14) einen Leiterstrang (16) bilden, wobei der erste Wickelkopfbereich (18) eine sich parallel zur Längserstreckungsachse der Induktionswicklung (12) erstreckende Nut (22) zur Aufnahme eines Statorzahnes (24) aufweist.

11. Bohrlochpumpe nach einem der vorhergehenden Ansprüche, wobei mindestens eine Leiterbahn (14) mindestens eine Ausnehmung (34) zur Kühlung der Leiterbahn (14) aufweist, wobei insbesondere sich die Ausnehmung (34) zumindest abschnittsweise in Längsrichtung der Leiterbahn (14) erstreckt, und/oder wobei die Induktionswicklung (12) konzentrisch mit einer Roebelung (36) ausgebildet ist.

12. Bohrlochpumpe nach einem der vorhergehenden Ansprüche, aufweisend zwölf Statorzähne mit sechs oder zwölf Induktionswicklungen (12), wobei insbesondere die Elektrische Maschine (10) neun Statorzähne mit neun Induktionswicklungen (12) aufweist, wobei insbesondere die Leiterbahnen (14) parallel oder in Reihe geschaltet sind und sich die Leiterbahnen (14) im äußeren Bereich jeder Induktionswicklung (12) nahe dem Sternpunktpotential befinden.

13. Bohrlochpumpe nach einem der vorhergehenden Ansprüche, wobei die Querschnittsflächen (32) der Leiterbahnen (14) innerhalb der Statornuten (28) unterschiedliche Formen und/oder Größen aufweisen, wobei insbesondere die Querschnittsflächen (32) der Leiterbahnen (14) innerhalb der Statornuten (28) rund, eckig und/oder gebogen ausgebildet sind, wobei insbesondere die Querschnittsflächen (32) der Leiterbahnen (14) zur Feldstärkekoordination ausgebildet sind, wobei insbesondere die ersten Leiterbahnen (34), ausgehend von einer Motor- oder Generatorklemme, größere Querschnittsflächen (36) aufweisen.

14. Bohrlochpumpe nach einem der vorhergehenden Ansprüche, wobei die Abstände zwischen den Leiterbahnen (14) entsprechend der auf die Leiterbahnen (14) einwirkenden Belastung durch die elektrische Feldstärke angepasst sind, wobei insbesondere die ersten Leiterbahnen (34), ausgehend von einer Motor- oder Generatorklemme, größere Abstände zu benachbarten Leiterbahnen (14) aufweisen, wobei insbesondere die Leiterbahnen (14) zumindest innerhalb der Statornut (28) einen Abstand im Bereich von 0,1 mm bis 2 mm aufweisen.

15. Bohrlochpumpe nach einem der vorhergehenden Ansprüche, wobei Steckkontakte der Induktionswicklung (12) mittels additiven Fertigungsverfahren hergestellt sind, wobei insbesondere die Induktionswicklung (12) einteilig mit den Steckkontakten ausgebildet ist, und/oder wobei die Leiterbahnen (14) abgerundete Kanten (60) zur Vermeidung von Spannungsüberhöhungen aufweisen.
